# EUROPÄISCHE PATENTSCHRIFT

(11) **EP 1 483 181 B1**
(45) Veröffentlichungstag und Bekanntmachung des Hinweises auf die Patenterteilung: **19.10.2005**
(21) Anmeldenummer: 02807027.4
(22) Anmeldetag: 13.11.2002
(51) Int. Cl.: B65D 90/14, B60P 1/64, B65D 88/12

(54) **CONTAINER**
CONTAINER
CONTENEUR

(30) Priorität: 12.03.2002 DE 10210815
(43) Veröffentlichungstag der Anmeldung: 08.12.2004
(73) Patentinhaber: Rheinmetall Defence Electronics GmbH, 28309 Bremen (DE)
(72) Erfinder: ENNENGA, Luitjen, 27798 Hude (DE); RISCHMANN, Heiko, 28844 Weyhe (DE)
(74) Vertreter: Thul, Hermann
(86) Internationale Anmeldenummer: PCT/EP2002/012691
(87) Internationale Veröffentlichungsnummer: WO 2003/076308

(56) Entgegenhaltungen:
- WO-A-88/06562
- WO-A-95/00419
- DE-A- 1 556 109
- DE-U- 1 967 665
- DE-U- 8 712 836
- DE-U- 20 017 151
- FR-A- 1 154 999
- US-A- 3 887 209

## Beschreibung

Die Erfindung betrifft eine mobile Plattform, insbesondere einem Straßenfahrzeug, wie Anhänger mit Zugmaschine, Lastkraftwagen mit Ladepritsche und dgl., mit einem abnehmbar aufgesetzten Container der im Oberbegriff des Anspruchs 1 angegebenen Gattung (siehe zum Beispiel das Dokument WO-A-95/00419).

Bekannte Container werden im allgemeinen am Verladeort mittels eines fahrzeugeigenen Hubgeschirrs oder eines Fremdladekrans auf das Fahrzeug gehievt und nach Transport am Zielort in gleicher Weise vom Fahrzeug abgenommen. Hierbei handelt es sich meist um reine Transportbehälter zur Aufnahme von Handelswaren, Stück- oder Schüttgut und dgl.. Andere Container sind als mobile, komplett eingerichtete Meß-, Überwachungs- oder Operationsräume konzipiert, die am Einsatzort sowohl vom Fahrzeug abgesetzt werden als auch auf dem Fahrzeug verbleiben. Um ein ordnungsgemäßes Arbeiten im Container sicherzustellen, muß der Container einigermaßen horizontal ausgerichtet sein, so daß der Container bzw. das den Container tragende Fahrzeug nur auf annähernd ebenen, waagerechten Flächen abgestellt werden kann.

Der Erfindung liegt die Aufgabe zugrunde, eine mobile Plattform der eingangs genannten Art so zu konzipieren, daß mit dem vorhandenen Hubstützsystem zum Auf- und Absetzen des Containers der Container bei Verbleib auf der Plattform an beliebigen Einsatzstellen, auch im unebenen Gelände, unabhängig von der Parkstellung der Plattform so nivelliert werden kann, daß seine Grundfläche in einer Horizontalebene liegt.

Die Aufgabe ist erfindungsgemäß durch die Merkmale im Anspruch 1 gelöst.

Die erfindungsgemäße mobile Plattform hat den Vorteil, daß für das Verladen und Absetzen und für das Nivellieren des Containers am Einsatzort nach Absetzen von der Plattform oder Belassen auf der Plattform stets das gleiche Hubstützensystem aus vier an den Eckpunkten des Containers angeordneten Hubstützen eingesetzt werden kann. Das Absetzen, Verladen und Nivellieren des Containers ist unabhängig von der Bodenebenheit am Einsatzort möglich, so in Schräglage und in ansteigenden oder abfallenden Geländeabschnitten. Soll der Container abgesetzt werden, so werden die Hubstützen von der Grundfläche weg ausgestellt, wobei sie vorzugsweise mit Abstand über beide Längskanten der Grundfläche des Containers hinaus soweit vorgestellt sind, daß sie durch vertikales Ausfahren sich neben der Plattform auf dem Boden abzustützen vermögen. Nach entsprechendem Ausfahren der Hubstützen und des damit verbundenen Anhebens des Containers kann die Plattform unter dem Container weggefahren werden. Durch unterschiedlich großes vertikales Ausschieben der Hubstützen können Unebenheiten am Einsatzort ausgeglichen und der Container mit seiner Grundfläche in einer Horizontalebene nivelliert werden. Soll der Container auf der parkenden Plattform verbleiben, so kann auch bei auf unebenem oder schrägem Untergrund geparkter Plattform der Container durch unterschiedlich großes Ausfahren der Hubstützen, die mit ihren Stützfüßen in den Stützlagern der Plattform aufgenommen sind, nivelliert, d.h. seine Grundfläche in eine Horizontalebene gebracht werden. Zum Wiederaufladen des Containers wird die Plattform unter den Container gesetzt und die Hubstützen vertikal so weit eingefahren, daß sich der Container auf die Plattform aufsetzt. Bei diesem Vorgang wird der Container durch geringes Verschieben der Hubstützen mittels der motorischen Mittel zum Ausstellen und Zurückführen der Hubstützen punktgenau auf der Plattform ausgerichtet, so daß beispielsweise in der Grundfläche des Containers vorgesehene Ausnehmungen, sog. ISO-Ecken, deckungsgleich zu an der Plattform angeordneten Dornen zur Aufnahme der ISO-Ecken ausgerichtet werden können. Danach werden die Hubstützen weiter eingefahren und wieder an den Container herangeführt, wobei sie hinter die Längskanten der Grundfläche und vor den Querkanten liegen. Durch erneutes vertikales Ausfahren werden die Hubstützen in die Stützlager eingesetzt und auf der Plattform abgestützt. Die mit ihren Stützfüßen in den Stützlagern festgespannten Hubstützen übernehmen damit beim Transport eine Sicherungsfunktion für den Container auf der Plattform. Das Ausstellen der Hubstützen mit Abstand vor die Längskanten der ContainerGrundfläche und das Zurückführen der Hubstützen hinter die Längskanten und vor die Querkanten, hat den Vorteil, daß einerseits bei Einhaltung der zulässigen Plattformbreite das Containervolumen maximiert werden kann und andererseits bei der Nivellierung des Containers auf der Plattform vorteilhaft ein großer Längsabstand zwischen den auf der Plattform sich abstützenden Hubstützen besteht.

Die Nivellierung des Containers auf der Plattform hat gegenüber einer denkbaren Nivellierung der Plattform selbst für die erforderliche Verbringung des Containers in eine horizontale Lage den Vorteil, daß lediglich der Container und nicht auch die Plattform mit ihrem erheblichen Gewicht angehoben werden muß, so daß das Hubstützensystem wegen des geringeren, zu bewegenden Gewichts leichter und kostengünstiger ausgeführt werden kann. Ist die Plattform ein an einer Zugmaschine angekuppelter Anhänger, so hat die Nivellierung des Containers auf der Plattform gegenüber einer Nivellierung des Anhängers selbst auf dem schrägen Boden den zusätzlichen Vorteil, daß die Anhängerkupplung die Nivellierung nicht durch ihre begrenzt zulässige Schwenkbewegung gegenüber der Zugmaschine einschränkt und somit die Kupplung zwischen Zugmaschine und Anhänger nicht gelöst werden muß. Damit wird eine wesentlich schnellere Einsatzbereitschaft des Containers im Gelände erzielt, insbesondere dann, wenn der Container nur für kurze Operationszeiten an wechselnden Einsatzorten genutzt wird.

Zweckmäßige Ausführungsformen der erfindungsgemäßen Plattform mit vorteilhaften Weiterbildungen und Ausgestaltungen der Erfindung ergeben sich aus den weiteren Ansprüchen.

Gemäß einer vorteilhaften Ausführungsform der Erfindung ist jede Hubstütze an einem Schwenkausleger gehalten, der am Container um eine vertikale Schwenkachse schwenkbar festgelegt ist, wobei das Ausstellen und Zurückführen der Hubstützen durch motorisches, insbesondere hydraulisches Schwenken der Schwenkausleger vornehmbar ist. Mit solchen Schwenkauslegern läßt sich die Verlagerung der Hubstützen konstruktiv besonders einfach bewerkstelligen. Die motorische Verschwenkung der Schwenkausleger erfolgt mittels hydraulischer Arbeitszylinder, im folgenden kurz Hydraulikzylinder genannt, mit quer zur Schwenkachse der Schwenkausleger ausgerichteter Wirkachse. Die horizontal wirkenden Hydraulikzylinder haben den zusätzlichen Vorteil, daß sie den Container beim Nivellieren verspannen, so daß er z.B. bei entsprechender Geländeneigung nicht "durchrutschen" kann, sobald er aus seiner Verankerung auf der Plattform herausgehoben worden ist, er vielmehr während des Nivellierens in jeder Position sicher gehalten wird. Beim Absenken des Containers auf die Plattform kann der Container durch die diskret ansteuerbaren, horizontal wirkenden Hydraulikzylinder fein manövriert werden. Bei allen Manövern wird eine Überlastung des einen oder anderen Hydraulikzylinders durch Überdruckventile verhindert. Durch die horizontal wirkenden Hydraulikzylinder kann der Container auch ohne Befestigung über die Container-ISO-Ecken beim Transport auf der Plattform fest verspannt werden, wenn die an der Plattform sich abstützenden Hubstützen mit ihren Stützfüßen in Stützlagern auf der Plattform festgespannt werden.

Gemäß einer vorteilhaften Ausführungsform der Erfindung ist an jeder hydraulisch vertikal verschiebbaren Hubstütze eine Stützenverlängerung vorgesehen, die teleskopartig in die Hubstütze ein- und ausschiebbar und in diskreten Verschiebeposition arretierbar ist. Die Stützenverlängerungen tragen an ihren von den Hubstützen abgekehrten freien Enden die Stützfüße der Hubstützen. Diese vorzugsweise mechanisch von Hand, aber auch elektromotorisch oder hydraulisch per Fernsteuerung zu bedienenden Stützenverlängerungen ermöglichen die Verwendung einfacher Hydraulikzylinder mit begrenzter Baulänge für die vertikal ausfahrbaren Hubstützen auch bei sehr unterschiedlich großen Ausfahrlängen der Hubstützen für unterschiedlich konstruierte Plattformen.

Gemäß einer bevorzugten Ausführungsform der mobilen Plattform ist die Containerauflage von einem an die Containergrundfläche angepaßten Adapterrahmen gebildet, der mindestens einen die beiden Querholme mit daran gehaltenen Stützlagern verbindenden Längsträger aufweist. Der Adapterrahmen ist zur wechselnden Befestigung an unterschiedlichen Plattformen ausgebildet, so daß nach Montage des Wechsel-Adapterrahmens jede Plattform für die Aufnahme und den Transport und die Nivellierung des Containers auf der Plattform geeignet ist.

Die Erfindung ist anhand eines in der Zeichnung illustrierten Ausführungsbeispiels im folgenden näher beschrieben. Es zeigen jeweils in perspektivischer Darstellung:
- Fig. 1: einen im Gelände abgesetzten Container mit ausgeschwenkten Hubstützen,
- Fig. 2: den Container gemäß Fig. 1 mit für den Transport auf einer mobilen Plattform eingeschwenkten Hubstützen,
- Fig. 3: einen Lastkraftwagen mit auf der Ladepritsche aufliegendem Container während des Transports des Containers,
- Fig. 4: Lastkraftwagen und Container in Fig. 3 nach Absetzen und Nivellieren des Containers in einem schrägen Geländeabschnitt,
- Fig. 5: einen auf einem schrägen Geländeabschnitt parkenden Lastkraftwagen mit aufliegendem, horizontal nivelliertem Container,
- Fig. 6: einen an einer geländegängigen Zugmaschine angekuppelten Anhänger zur Aufnahme eines Containers (schematisch dargestellt) und den vom Anhänger abgesetzten und in einem schrägen Geländeabschnitt horizontal nivellierten Container,
- Fig. 7: den an der in einem schrägen Geländeabschnitt parkenden Zugmaschine angekuppelten Anhänger gemäß Fig. 6 mit auf dem Anhänger aufliegenden, horizontal nivellierten Container,
- Fig. 8: einen Wechselrahmen zur Adaption des Containers an unterschiedliche, mobile Plattformen.

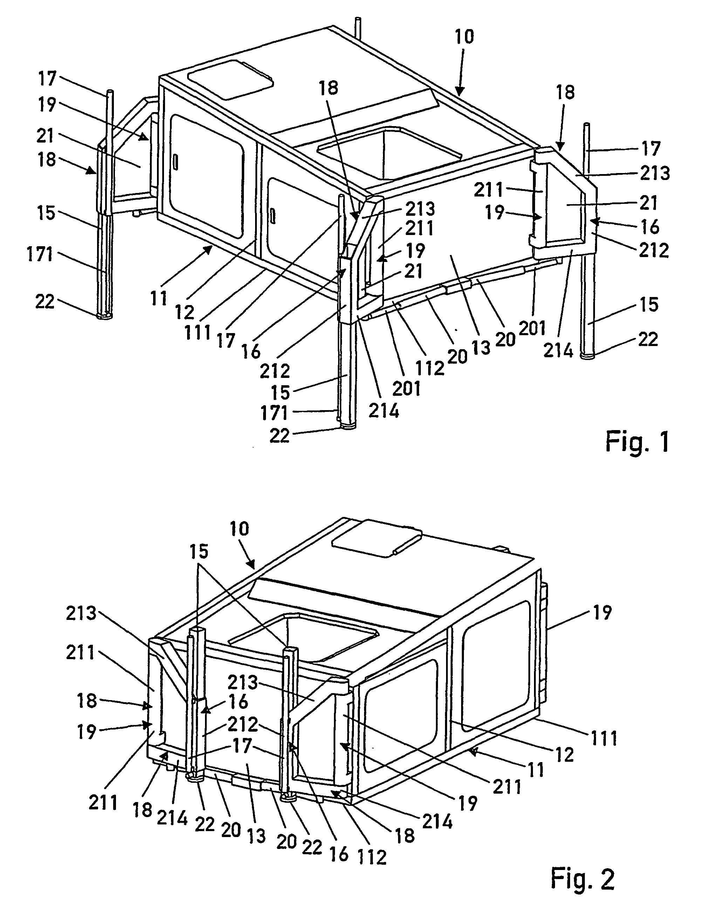

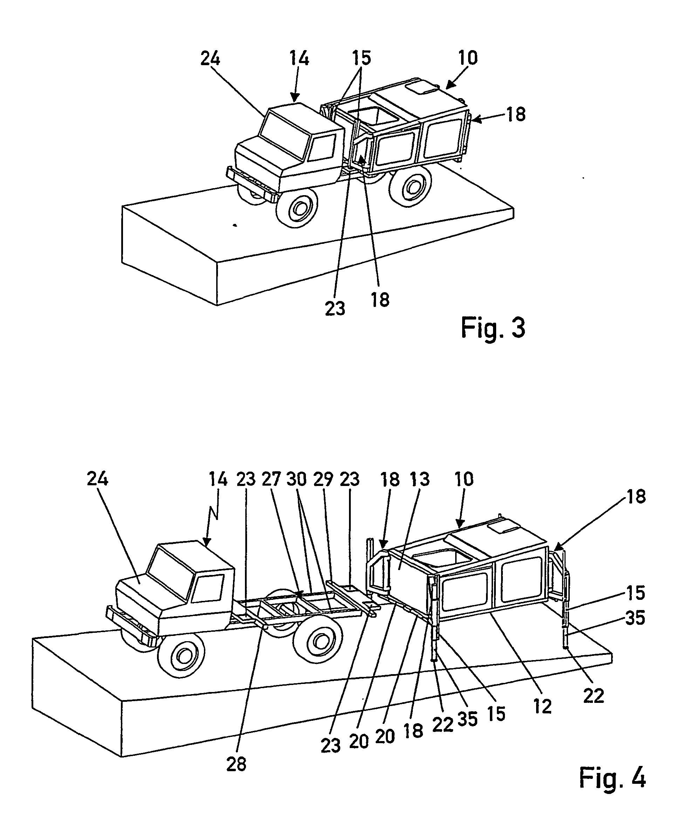

Der in Fig. 1 und 2 in perspektivischer Ansicht zu sehende Container 10 ist quaderförmig und weist eine rechteckförmige Grundfläche 11 mit zwei parallelen Längskanten 111 und zwei parallelen Querkanten 112 auf. Die Längskanten 111 begrenzen je eine Längsseite 12 des Containers 10 und die Querkanten 112 je eine Stirnseite 13 des Containers 10. Der Container 10 ist zum Transport auf einer mobilen Plattform 14 (Fig. 3 - 7) ausgebildet und ist ohne fremde Hilfsmittel auf die Plattform 14 aufsetzbar, auf dieser transportsicher festlegbar und von dieser an einem beliebigen Einsatzort wieder absetzbar. Hierzu ist ein Hubstützensystem aus vier den Eckpunkten des Containers 10 zugeordneten Hubstützen 15 vorgesehen. Die Hubstützen 15 sind hydraulisch vertikal verschiebbar, wozu sie in einem vertikalen Führungsrohr 16 axial verschieblich aufgenommen sind. An jeder Hubstütze 15 greift die Kolbenstange 171 eines hydraulischen Arbeitszylinders, kurz Hydraulikzylinders 17 an, der seinerseits an dem Führungsrohr 16 festgelegt ist.

Jede Hubstütze 15 ist an einem Schwenkausleger 18 gehalten, der am Container 10 um eine vertikale Schwenkachse schwenkbar befestigt ist. Der Schwenkausleger 18 ist in einem auf der Stirnseite 13 des Containers 10 festgelegten Schwenklager 19 drehbar aufgenommen. Die Schwenkausleger 18 sind so ausgebildet, daß sie einerseits beim Ausschwenken nach außen die Hubstützen 15 über die beiden Längskanten 111 der Grundfläche 11 des Containers 10 hinaus vorstellen, damit die Hubstützen 15 neben der mobilen Plattform 14 auf dem Boden abgestützt werden können, und andererseits beim Einschwenken die Hubstützen 15 hinter die beiden Längskanten 111 zurücknehmen, so daß sie nunmehr auf der mobilen Plattform 14 abgestützt werden können. Im letzten Fall sind die Schwenkausleger 18 mit Hubstützen 15 an die beiden Stirnseiten 13 des Containers 10 angeschwenkt, und die Hubstützen 15 liegen vor den Querkanten 112 der Grundfläche 11. Vorzugsweise werden die Schwenklager 19 der Schwenkausleger 18 mittels leicht lösbaren Schraubverbindungen am Container 10 befestigt, damit sie ggf. ohne Sonderwerkzeuge vom Container 10 getrennt werden können. Die Abnehmbarkeit der Schwenkausleger 18 hat den Vorteil, daß sie einerseits bei Defekt durch Komplettaustausch am Einsatzort schnell repariert und andererseits für Spezialtransporte z.B. in Hubschraubern oder Flugzeugen, demontiert werden können, um die äußeren Abmessungen des Containers 10 zu verkleinern.

Das Aus- und Einschwenken der Schwenkausleger 18 mit den daran befestigten Hubstützen 15 erfolgt hydraulisch durch hydraulische Arbeitszylinder oder Hydraulikzylinder 20, die sich an den Container-Stirnseiten 13 abstützen und mit im wesentlichen quer zur Schwenkachse der Schwenkausleger 18, also horizontal, ausgerichteter Wirkrichtung an den Schwenkauslegern 28 angreifen. Die Abstütz- und Angriffspunkte der Hydraulikzylinder 20 sind dabei so angeordnet, daß in der Einschwenkstellung, in welcher die Hubstützen 15 wieder hinter die Längskanten 111 der Grundfläche 11 zurückgenommen sind, die vor die Stirnseiten 13 geschwenkten Schwenkausleger 18 mit den Stirnseiten 13 jeweils einen spitzen Winkel von z.B. 20° einschließen. Um die vorstehen beschriebene schnelle Trennbarkeit der Schwenkausleger 18 vom Container 10 zu gewährleisten, sind die Hydraulikzylinder 20 über hier nicht dargestellte Schnellverschlußkupplungen mit dem Container 10 verbunden.

In den dargestellten Ausführungsbeispielen sind die Schwenkausleger 18 als asymmetrische Trapezfachwerke ausgebildet, die jeweils zwei Parallelstreben 211 und 212 und zwei Schenkelstreben 213 und 214 aufweisen. Die längere Parallelstrebe 211 ist als Schwenkwelle ausgebildet, die in dem als langgestrecktes Lagerrohr ausgebildeten Schwenklager 19 aufgenommen ist. Die kürzere Parallelstrebe 212 bildet das Führungsrohr 16 zur axial verschieblichen Aufnahme der Hubstütze 15. An der unteren Schenkelstrebe 214, die etwa parallel zur Grundfläche 11 des Containers 10 verläuft, greift die Kolbenstange 201 des Hydraulikzylinders 20 an. Der Angriffspunkt der Kolbenstange 201 ist als Gelenk ausgeführt. Ebenso ist der Abstützpunkt des Hydraulikzylinders 20 an der Stirnseite 13 des Containers 10 drehbeweglich ausgeführt.

Am unteren freien Ende der Hubstützen 15 ist jeweils ein Stützfuß 22 angeordnet. Die Stützfüße 22 dienen bei ausgeschwenkten Schwenkauslegern 18 zur Abstützung neben der mobilen Plattform 14 auf dem Untergrund (vgl. Fig. 1, 4 und 6) und in der Einschwenkstellung der Schwenkausleger 18 zum Abstützen auf der mobilen Plattform 14 (vgl. Fig. 3, 5 und 7). An der mobilen Plattform 14 sind hierzu Stützlager 23 ausgebildet, in welchen die durch vertikales Ausschieben der Hubstützen 15 in die Stützlager 23 eingeschobenen Stützfüße 22 verspannt werden können.

In Fig. 3 und 4 wird die mobile Plattform 14 von einem Lastkraftwagen 24 mit Ladepritsche gebildet. In Fig.. 6 und 7 ist die mobile Plattform 14 ein mit einer geländegängigen Zugmaschine 25 gekuppelter Anhänger 26. Sowohl der Lastkraftwagen 24 als auch der Anhänger 2.6 besitzen eine Containerauflage 27 für den Container 10, die einen vorderen Querholm 28 und einen hinteren Querholm 29 zur Abstützung des Containers 10 aufweist. Die beiden Querholme 28., 29 sind durch mindestens einen Längsträger 30 miteinander starr verbunden. Jedem Querholm 28 bzw. 29 ist ein Paar von Stützlagern 23 zugeordnet, die auf den voneinander abgekehrten Seiten der Querholme 28, 29 angeordnet sind. Um den Container 10 auf verschiedenen Typen von mobilen Plattformen 14 transportieren zu können, ist die Containerauflage 27 als von der Plattform 14 separierbarer, eigenständiger Adapterrahmen 31 ausgebildet, wie er in Fig. 8 dargestellt ist. Der Adapterrahmen 31 weist eine hier nicht dargestellte Befestigungsstruktur auf, mit der er auf den verschiedenen mobilen Plattformen 14 befestigt werden kann. An den beiden außenliegenden Enden der Querholme 28, 29 ist jeweils ein sog. Dorn 32 angeordnet, der vertikal von der Containerauflagefläche 281 bzw. 291 der beiden Querholme 28, 29 emporragt. Beim Aufsetzen des Containers 10 auf die Querholme 28, 29 tauchen diese Dorne 32 formschlüssig in hier nicht dargestellte Ausnehmungen in der Grundfläche 11 des Containers 10, üblicherweise als ISO-Ecken bezeichnet, formschlüssig ein, so daß der Container 10 gegen Verrutschen in Längs- oder Querrichtung auf der Containerauflage 27 gesichert ist. Zusätzlich wird der Container 10 meist noch kraftschlüssig, z.B. durch Schraubhebel, im Bereich der ISO-Ecken fixiert. In jedem Paar Stützlager 23, das dem Querholm 28 bzw. 29 zugeordnet ist, ist jeweils ein Stützlager 23 als Festlager 33 mit fester Zentrierung des Stützfußes 22 und das andere Stützlager 23 als Loslager 34 mit Festlegung des Stützfußes 22 nur in Längsrichtung ausgebildet. Während das Festlager 33 jegliche Bewegung des Stützfußes 22 relativ zum Adapterrahmen 31 verhindert, ermöglicht das Loslager 34 eine Verschiebung des Stützfußes 23 ausschließlich in Querrichtung des Adapterrahmens 31. Das Festspannen und Lösen der in den Stützlagern 23 aufgenommenen Stützfüße 22 erfolgt durch Handhebel 36, von denen jeweils einer einem Stützlager 23 zugeordnet ist. Alternativ ist eine vorzugsweise fernbediente, elektrische oder hydraulische Verriegelung möglich. Die beiden Festlager 33 und die beiden Loslager 34 sind an den Querholmen 28, 29 so angeordnet, daß sie einander diagonal gegenüberliegen.

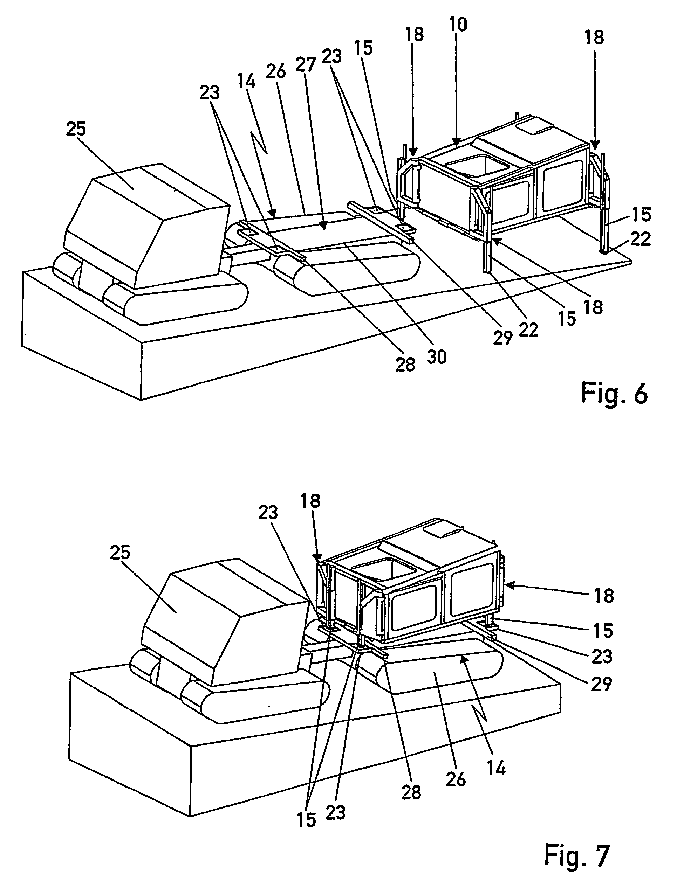

Da bei den zum Einsatz kommenden, verschiedenen, mobilen Plattformen 14 der Abstand zwischen dem Boden und der Oberkante des Adapterrahmens 31, auf dem der Container 10 aufgenommen wird, stark variiert (vgl. Fig. 6,7 und 3,4), variiert somit auch die erforderliche Ausfahrlänge der Hubstützen 15 zum Absetzen des Containers 10 von der mobilen Plattform 14 erheblich. Um einen möglichst einfachen Hydraulikzylinder 17 mit begrenzter Baulänge zum vertikalen Ausschieben der Hubstützen 15 verwenden zu können, ist an jeder Hubstütze 15 eine Stützenverlängerung 35 vorgesehen, die teleskopartig in die Hubstütze 15 einschiebbar oder aus der Hubstütze 15 ausziehbar ist und an ihrem von der Hubstütze 15 abgekehrten freien Ende den Stützfuß 22 trägt. Die Stützenverlängerung 35 ist dabei so konzipiert, daß sie in diskreten Verschiebepositionen relativ zur Hubstütze 15 arretiert werden kann. Das Ausziehen und Einschieben der Stützenverlängerungen 35 aus den Hubstützen 15 heraus bzw. in die Hubstützen 15 hinein, sowie das Arretieren der Stützenverlängerung 35 an den Hubstützen 15 erfolgt per Hand, kann aber auch elektrisch oder hydraulisch ggf. unter Benutzung einer Fernbedienung durchgeführt werden.

In Fig. 3 und 4 ist das Absetzen des Containers 10 von der Ladepritsche des die mobile Plattform 14 bildenden Lastkraftwagens 24 illustriert.

Für den normalen Transportfall des Containers 10 auf der mobilen Plattform 14 bzw. dem Lastkraftwagen 24 (Fig. 3) sind die Stützfüße 22 der Hubstützen 15 in den Stützlagern 23 an der Containerauflage 27 verriegelt. Die Schwenkausleger 18 liegen dabei nicht ganz an.der Stirnseite 13 des Containers 10 an, sondern schließen mit dieser einen kleinen spitzen Winkel von beispielsweise 20° ein. Mittels der bereits beschriebenen ISO-Ecken und der auf der Containerauflage 27 vorhandenen Gegenstücke, den sog. Dornen 32, ist der Container 10 fest mit dem Lastkraftwagen 24 verbunden. Fehlen diese ISO-Ecken am Container 10., so ist der sichere Transport auch durch die fest eingespannten Stützfüße 22 der Hubstützen 15 in den Stützlagern 23 gewährleistet.

Für das Absetzen des Containers 10 wird - wenn vorhanden - die Befestigung der ISQ-Ecken gelöst und werden die Stützfüße 22 der Hubstützen 15 von Hand entriegelt. Die Hubstützen 15 werden mittels der vertikal wirkenden Hydraulikzylinder 17 aus den Stützlagern 23 herausgehoben, und anschließend werden die Schwenkausleger 18 mittels der horizontal wirkenden Hydraulikzylinder 20 nach außen geschwenkt (Fig. 4). Die Schwenkausleger 18 sind dabei so konstruiert, daß in dieser maximalen Schwenkposition der Hubstützen 15 der Querabstand zweier Hubstützen 15 voneinander größer ist als die maximale Breite des Lastkraftwagens 24. Nunmehr werden von Hand (ggf. elektrisch oder hydraulisch) die Stützenverlängerungen 35 maximal oder nur so weit ausgezogen, bis sie in etwa den Boden berühren, und dann an den Hubstützen 15 arretiert. Danach werden durch Ansteuern der vertikal wirkenden Hydraulikzylinder 17 die Hubstützen 15 in den Führungsrohren 16 nach unten verschoben, wodurch sich der Container 10 von der Containerauflage 27 abhebt und der Lastkraftwagen 24 unter dem Container 10 weggefahren werden kann. Nunmehr wird je nach Geländeneigung der Container 10 durch entsprechendes Ein- und/oder Ausfahren der Hubstützen 15 so nivelliert, daß seine Grundfläche 11 in einer Horizontalebene liegt. Mittels Nivellierungssensoren wird dieser Nivellierungsvorgang automatisch gesteuert.

Das Wiederaufnehmen des Containers 10 durch den Lastwagen 24 erfolgt in umgekehrter Reihenfolge.

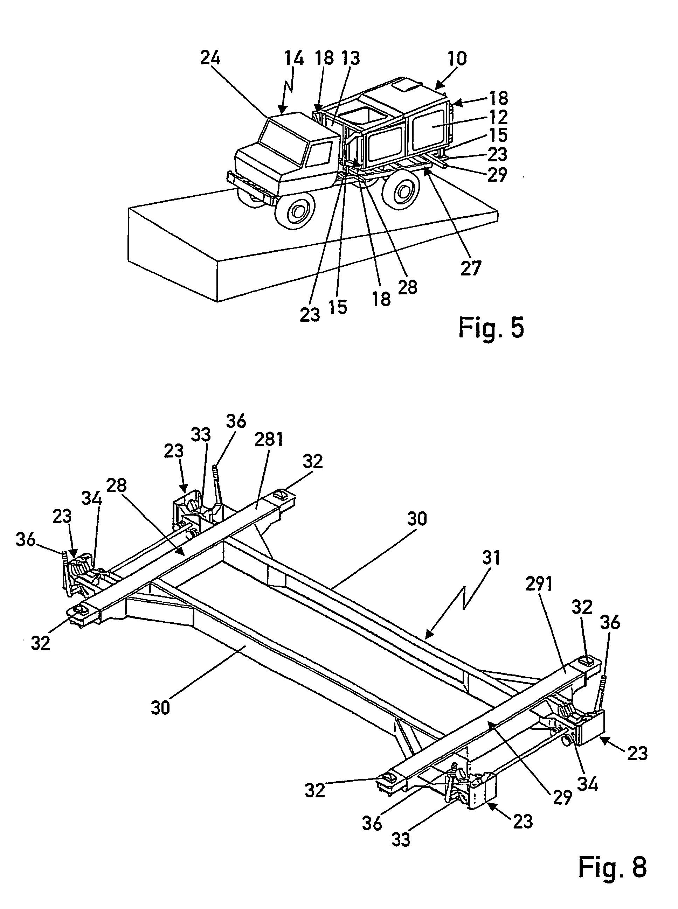

Der Container 10 wird vorwiegend nur dann von der mobilen Plattform 14 getrennt und im Gelände abgesetzt, wenn die mobile Plattform 14 noch andere Aufgaben durchzuführen hat, z.B. weitere Container 10 transportieren muß. Für eine schnelle Einsatzbereitschaft des Containers 10 oder bei nur kurzen Operationszeiten des Containers 10 an einem bestimmten Einsatzort verbleibt der Container 10 auf der mobilen Plattform 14. Auch in diesem Fall ist es für den operativen Einsatz des Containers 10 erforderlich, diesen so zu nivellieren, daß seine Grundfläche 11 in einer Horizontalebene liegt. Hierzu werden, falls der Container 10 mittels der ISO-Ecken mit dem Adapterrahmen 31 verbunden ist, diese gelöst. Anschließend wird der Container 10 mittels der in den Stützlagern 23 festgelegten Hubstützen 15 nivelliert, indem mittels der vertikal wirkenden Hubzylinder 17 die eine oder andere Hubstütze 15 solange ausgefahren wird, bis die Nivellierungsebene erreicht ist. Dieser Vorgang erfolgt mit den gleichen Nivellierungssensoren und der gleichen automatischen Steuerung der Hubzylinder 17. Während dieses Nivellierungsvorgangs arbeiten auch die horzitontal wirkenden Hydraulikzylinder 20 und spannen den Container 10 in seiner Position, so daß er nicht nach einer Seite (entsprechend der Geländeneigung) durchrutschen kann, nachdem er durch Anheben aus der formschlüssigen Verbindung der ISO-Ecken herausgehoben worden ist. In den Hydraulikzylindern 20 vorhandene Überdruckventile verhindern dabei eine Überlastung der Hydraulikanlage. Während des Nivellierens des Containers 10 wird eine Längenänderung der Hubstützen 15 durch eine leichte Verdrehung des Containers 10 relativ zur Containerauflage 27 sowie durch eine Veränderung der Winkel der zu Beginn mit ca. 20° gegenüber den Stirnseiten 13 des Containers 10 offenstehenden Schwenkausleger 18 kompensiert. Ein sicheres Halten des Containers 10 in jeder Position bei diesem Vorgang wird durch die horizontal wirkenden Hydraulikzylinder 20 erreicht, die eine hydraulische Einspannung des Containers 10 sicherstellen. Dabei entstehende Überdrücke in den Hydraulikzylindern 20 werden wiederum durch die vorhandenen Überdruckventile begrenzt. Ein auf der mobilen Plattform 14 nivellierter Container 10 ist in Fig. 5 und 7 dargestellt.

Zum Weitertransport des Containers 10 wird dieser wieder durch hydraulisches Einfahren der Hubstützen 15 auf die Containerauflage 27 abgesenkt (Fig. 3). Dabei kann der Container 10 durch die diskret ansteuerbaren, horizontal wirkenden Hydraulikzylinder 20 fein manövriert und mit den ISO-Ecken auf die Dorne 32 (Fig. 8) der Containerauflage 27 aufgesetzt werden.

In einer alternativen Ausführungsform der Erfindung können die Hubstützen 15 und/oder die Schwenkausleger 18 auch elektromotorisch betätigt werden.

## Patentansprüche

1. Mobile Plattform, insbesondere Straßenfahrzeug, wie Anhänger (26) mit Zugmaschine (25), Lastkraftwagen (24) mit Ladepritsche und dgl., mit einem abnehmbar aufgesetzten Container (10), der eine rechteckförmige Grundfläche (11) mit zwei Längs- und zwei Querkanten aufweist, mit vier an jeweils einem der Eckpunkte der Grundfläche (11) angeordneten, motorisch, vorzugsweise hydraulisch, vertikal verschiebbaren Hubstützen (15), die jeweils an einem Schwenkausleger (18) gehalten und durch Schwenken der Schwenkausleger (18) um eine vertikale Schwenkachse über die Längskanten hinaus und hinter die Längskanten zurück vor die Querkanten schwenkbar sind, **gekennzeichnet durch** eine Containerauflage (27), die einen vorderen und einen hinteren Querholm (28, 29) zum Abstützen des Containers (10) und zwei jeweils einem Querholm zugeordnete Paare von Stützlagern (23) aufweist, die auf voneinander abgekehrten Seiten der Querholme angeordnet sind, und **dadurch**, daß die Hubstützen (15) an ihrem unteren, freien Ende je eine Stützfuß (22) aufweisen, der zur Aufnahme in einem Stützlager (23) ausgebildet ist.

2. Mobile Plattform nach Anspruch 1, **dadurch gekennzeichnet, daß** von jedem Paar der Stützlager (23) ein Stützlager (23) als Festlager (33) und ein Stützlager (23) als Loslager (34) ausgebildet ist.

3. Mobile Plattform nach Anspruch 2, **dadurch gekennzeichnet, daß** die Festlager (33) und die Loslager (34) an den beiden Querholmen (28, 29) einander diagonal gegenüberliegen.

4. Mobile Plattform nach Anspruch 2 oder 3, **dadurch gekennzeichnet, daß** die Festlager (33) so ausgebildet sind, daß der aufgenommene Stützfuß (22) gegen Verschieben in Längs- und Querrichtung gesichert ist.

5. Mobile Plattform nach einem der Ansprüche 2 - 4, **dadurch gekennzeichnet, daß** die Loslager (34) so ausgeführt sind, daß der aufgenommene Stützfuß (22) nur gegen Verschieben in Längsrichtung gesichert ist.

6. Mobile Plattform nach einem der Ansprüche 1 - 5, **dadurch gekennzeichnet, daß** an jedem Schwenkausleger (18) ein am Container (10), vorzugsweise über eine Schnellverschlußkupplung, befestigter, hydraulischer Arbeitszylinder (20) mit im wesentlichen quer zur Schwenkachse des Schwenkauslegers (18) ausgerichteter Wirkrichtung angreift.

7. Mobile Plattform nach Anspruch 6, **dadurch gekennzeichnet, daß** der Container (10) Quaderform mit von den Längskanten (111) der Grundfläche (11) begrenzten Längsseiten (13) und von den Querkanten (112) der Grundfläche (11) begrenzten Stirnseiten (13) aufweist, daß die vertikal ausgerichteten Schwenkachsen der Schwenkausleger (18) in auf den Stirnseiten (13), vorzugsweise lösbar, angeordneten Schwenklagern (19) aufgenommen sind und daß die Befestigungs- und Angriffspunkte der hydraulischen Arbeitszylinder (20) so angeordnet sind, daß die Schwenkausleger (18) in ihrer an die Container-Stirnseite (13) angeschwenkten Schwenkstellung mit den Container-Stirnseiten (13) jeweils einen kleinen spitzen Winkel einschließen.

8. Mobile Plattform nach Anspruch 7, **dadurch gekennzeichnet, daß** jeder Schwenkausleger (18) als vorzugsweise asymmetrisches Trapezfachwerk mit zwei Parallelstreben (211, 212) und zwei Schenkelstreben (213, 214) ausgebildet ist, dessen längere Parallelstrebe (211) in dem Schwenklager (19) aufgenommen ist und dessen kürzere Parallelstrebe (212) ein Führungsrohr (16) für die Hubstütze (15) bildet.

9. Mobile Plattform nach Anspruch 8, **dadurch gekennzeichnet, daß** die Angriffspunkte der hydraulischen Arbeitszylinder (20) an den unteren Schenkelstreben (214) der Trapezfachwerke (21) liegen.

10. Mobile Plattform nach einem der Ansprüche 1 - 9, **dadurch gekennzeichnet, daß** an jeder Hubstütze (15) eine an ihrem hubstützenfernen Ende den Stützfuß (22) tragende Stützenverlängerung (35) vorgesehen ist, die teleskopartig in die Hubstütze (15) ein- und ausschiebbar und in diskreten Verschiebepositionen arretierbar ist.

11. Mobile Plattform nach einem der Ansprüche 1 - 10, **dadurch gekennzeichnet, daß** die Containerauflage (27) von einem auf der Plattform (14) lösbar befestigten Adapterrahmen (31) gebildet ist, der an die Grundfläche (11) des Containers (10) angepaßt ist und mindestens einen die beiden Querholme (28, 29) miteinander starr verbindenden Längsträger (30) aufweist.

12. Mobile Plattform nach einem der Ansprüche 1 - 11, **dadurch gekennzeichnet, daß** an den freien Enden der Querholme (28, 29) auf deren die Grundfläche (11) des Containers (10) aufnehmenden Oberfläche (281, 291) Dorne (35) zur formschlüssigen Aufnahme von in der Grundfläche (11) eingebrachten Ausnehmungen angeordnet sind.

## Claims

1. Mobile platform, in particular road vehicle, such as trailer (26) with towing machine (25), lorry (24) with loading platform and the like, having a container (10) which is placed on removably and has a rectangular base surface (11) with two longitudinal edges and two transverse edges, having four lifting supports (15) which are arranged at in each case one of the corner points of the base surface (11), can be displaced vertically by motor, preferably hydraulically, are in each case held on a pivoting extension arm (18) and, by the pivoting extension arms (18) being pivoted about a vertical pivot axis, can be pivoted beyond the longitudinal edges and behind the longitudinal edges back to in front of the transverse edges, **characterized by** a container support (27) which has a front and a rear crossbar (28, 29) for supporting the container (10) and two pairs of supporting bearings (23) which are assigned in each case to a crossbar and are arranged on mutually remote sides of the crossbars, and in that, at their lower, free end, the lifting supports (15) each have a supporting foot (22) which is designed for accommodation in a supporting bearing (23).

2. Mobile platform according to Claim 1, **characterized in that** of each pair of supporting bearings (23) one supporting bearing (23) is designed as a fixed bearing (33) and one supporting bearing (23) is designed as a movable bearing (34).

3. Mobile platform according to Claim 2, **characterized in that** the fixed bearings (33) and the movable bearings (34) are situated diagonally opposite one another on the two crossbars (28, 29).

4. Mobile platform according to Claim 2 or 3, **characterized in that** the fixed bearings (33) are designed in such a manner that the accommodated supporting foot (22) is secured against displacement in the longitudinal and transverse directions.

5. Mobile platform according to one of Claims 2-4, **characterized in that** the movable bearings (34) are designed in such a manner that the accommodated supporting foot (22) is secured only against displacement in the longitudinal direction.

6. Mobile platform according to one of Claims 1 - 5, **characterized in that** a hydraulic working cylinder (20) which is fastened to the container (10), preferably via a quick-acting closure coupling, and has a direction of action oriented essentially transversely with respect to the pivot axis of the pivoting extension arm (18) engages on each pivoting extension arm (18).

7. Mobile platform according to Claim 6, **characterized in that** the container (10) has a cuboidal shape with longitudinal sides (13) bounded by the longitudinal edges (111) of the base surface (11) and end sides (13) bounded by the transverse edges (112) of the base surface (11), **in that** the vertically oriented pivot axes of the pivoting extension arm (18) are mounted in pivot bearings (19) arranged, preferably releasably, on the end sides (13), and **in that** the fastening and engagement points of the hydraulic working cylinder (20) are arranged in such a manner that the pivoting extension arms (18), in their pivoting position in which they are pivoted onto the container end side (13), enclose a small acute angle in each case with the container end sides (13).

8. Mobile platform according to Claim 7, **characterized in that** each pivoting extension arm (18) is designed as a preferably asymmetrical trapezium framework with two parallel struts (211, 212) and two leg-type struts (213, 214), the longer parallel strut (211) of which is accommodated in the pivot bearing (19) and the shorter parallel strut (212) of which forms a guide tube (16) for the lifting support (15).

9. Mobile platform according to Claim 8, **characterized in that** the engagement points of the hydraulic working cylinders (20) are situated on the lower leg-type strut (214) of the trapezium framework (21).

10. Mobile platform according to one of Claims 1 - 9, **characterized in that** a support extension (35) which, at its end remote from the lifting support, bears the supporting foot (22) and can be pushed telescopically into and out of the lifting support (15) and can be locked in discrete displacement positions is provided on each lifting support (15).

11. Mobile platform according to one of Claims 1 - 10, **characterized in that** the container support (27) is formed by an adapter frame (31) which is fastened releasably on the platform (14), is matched to the base surface (11) of the container (10) and has at least one longitudinal member (30) rigidly connecting the two crossbars (28, 29) to each other.

12. Mobile platform according to one of Claims 1 - 11, **characterized in that** pins (35) for receiving, in a form-fitting manner, recesses made in the base surface (11) are arranged at the free ends of the crossbars (28, 29), on their surface (281, 291) receiving the base surface (11) of the container (10).

## Revendications

1. Plate-forme mobile, notamment véhicule routier, comme une remorque (26) avec un tracteur (25), un poids lourds (24) avec une benne de charge et similaires, comprenant un conteneur (10) posé de manière amovible, qui présente une surface de base réctangulaire (11) avec deux arêtes longitudinales et deux arêtes transversales, avec quatre supports de levage (15) disposés chacun en un des coins de la surface de base (11), déplaçables verticalement par un moteur, de préférence hydrauliquement, qui sont maintenus chacun sur un bras pivotant (18) et qui peuvent être pivotés par pivotement des bras pivotants (18) autour d'un axe de pivotement vertical au-delà des arêtes longitudinales et en revenant derrière les arêtes longitudinales devant les arêtes transversales, **caractérisée par** un appui de conteneur (27) qui présente un longeron transversal avant et un longeron transversal arrière (28, 29) pour le support du conteneur (10) et deux paires de paliers de support (23) associées respectivement à un longeron transversal, qui sont disposées sur des côtés des longerons transversaux détournés l'un de l'autre, et par le fait que les supports de levage (15) présentent à leur extrémité libre inférieure un pied de support respectif (22) qui est réalisé pour se loger dans un palier de support (23).

2. Plate-forme mobile selon la revendication 1, **caractérisée en ce que** sur chaque paire de paliers de support (23), un palier de support (23) est réalisé en tant que palier fixe (33) et un palier de support (23) est réalisé en tant que palier libre (34).

3. Plate-forme mobile selon la revendication 2, **caractérisée en ce que** les paliers fixes (33) et les paliers libres (34) sont opposés diagonalement les uns aux autres sur les deux longerons transversaux (28, 29).

4. Plate-forme mobile selon la revendication 2 ou 3, **caractérisée en ce que** les paliers fixes (33) sont réalisés de telle sorte que le pied de support logé (22) est fixé contre tout déplacement dans la direction longitudinale et transversale.

5. Plate-forme mobile selon l'une quelconque des revendications 2 à 4, **caractérisée en ce que** les paliers libres (34) sont réalisés de telle sorte que le pied de support logé (22) n'est fixé que contre un déplacement dans la direction longitudinale.

6. Plate-forme mobile selon l'une quelconque des revendications 1 à 5, **caractérisée en ce que** sur chaque bras pivotant (18) vient en prise un cylindre de travail hydraulique (20), fixé sur le conteneur (10), de préférence par le biais d'un accouplement à raccord rapide, avec une direction d'action orientée essentiellement transversalement à l'axe de pivotement du bras pivotant (18).

7. Plate-forme mobile selon la revendication 6, **caractérisée en ce que** le conteneur (10) présente une forme parallélépipédique avec des côtés longitudinaux (13) délimités par les arêtes longitudinaux (111) de la surface de base (11) et des côtés frontaux (13) délimités par les arêtes transversales (112) de la surface de base (11), **en ce que** les axes de pivotement orientés verticalement des bras pivotants (18) sont reçus dans des paliers pivotants (19) disposés sur les côtés frontaux (13), de préférence de manière détachable, et **en ce que** les points de fixation et d'engagement des cylindres de travail hydrauliques (20) sont disposés de telle sorte que les bras pivotants (18) forment dans leur position pivotée rabattue contre le côté frontal (13) du conteneur, avec les côtés frontaux (13) du conteneur, à chaque fois un petit angle aigu.

8. Plate-forme mobile selon la revendication 7, **caractérisée en ce que** chaque bras pivotant (18) est réalisé sous forme de structure trapézoïdale de préférence asymétrique avec deux montants parallèles (211, 212) et deux montants de branche (213, 214), dont le montant parallèle plus long (211) est reçu dans le palier pivotant (19) et dont le montant parallèle plus court (212) forme un tube de guidage (16) pour le support de levage (15).

9. Plate-forme mobile selon la revendication 8, **caractérisée en ce que** les points d'engagement des cylindres de travail hydrauliques (20) se situent au niveau des montants de branche inférieurs (214) des structures trapézoïdales (21).

10. Plate-forme mobile selon l'une quelconque des revendications 1 à 9, **caractérisée en ce que** l'on prévoit sur chaque support de levage (15) une prolongation de support (35) portant à son extrémité éloignée du support de levage le pied de support (22), laquelle peut être enfoncée dans le support de levage (15) et ressortie de celui-ci et peut être bloquée dans des positions de coulissement discrètes.

11. Plate-forme mobile selon l'une quelconque des revendications 1 à 10, **caractérisée en ce que** l'appui de conteneur (27) est formé par un cadre d'adaptateur (31) fixé de manière desserrable sur la plate-forme (14), qui est adapté à la surface de base (11) du conteneur (10), et présente au moins un support longitudinal (30) reliant rigidement les deux longerons transversaux (28, 29) l'un à l'autre.

12. Plate-forme mobile selon l'une quelconque des revendications 1 à 11, **caractérisée en ce que** l'on prévoit aux extrémités libres des longerons transversaux (28, 29), sur leur surface (281, 291) recevant la surface de base (11) du conteneur (10), des mandrins (35) destinés à être reçus par engagement par coopération de forme dans des évidements pratiqués dans la surface de base (11).
